# EUROPÄISCHE PATENTSCHRIFT

(11) **EP 3 640 442 B1**
(45) Veröffentlichungstag und Bekanntmachung des Hinweises auf die Patenterteilung: **09.06.2021**
(21) Anmeldenummer: 19201875.2
(22) Anmeldetag: 08.10.2019
(51) Int. Cl.: F01N 3/00, F01N 9/00, F02M 25/022, B01D 53/26

(54) **VERBRENNUNGSKRAFTMASCHINE UMFASSED EIN SYSTEM ZUR WASSERGEWINNUNG AUS EINEM ABGAS DER VERBRENNUNGSKRAFTMASCHINE**
COMBUSTION ENGINE HAVING A SYSTEM FOR RECOVERING WATER FROM AN EXHAUST GAS OF THE COMBUSTION ENGINE
MOTEUR À COMBUSTION INTERNE AVEC UN SYSTÈME DE RÉCUPÉRATION DE L'EAU D'UN GAZ D'ÉCHAPPEMENT DU MOTEUR À COMBUSTION INTERNE

(30) Priorität: 18.10.2018 DE 102018125949
(43) Veröffentlichungstag der Anmeldung: 22.04.2020
(73) Patentinhaber: Volkswagen AG, 38440 Wolfsburg (DE); Audi AG, 85045 Ingolstadt (DE)
(72) Erfinder: Lange, Holger, 38106 Braunschweig (DE); Käppner, Christoph, 38118 Braunschweig (DE); Hanisch, Thomas, 91795 Dollnstein (DE); Knabl, Daniel, 85055 Ingolstadt (DE)
(74) Vertreter: Gulde & Partner

(56) Entgegenhaltungen:
- DE-A1-102016 205 525
- US-A1- 2004 107 832
- US-A1- 2007 095 209

## Beschreibung

Die Erfindung betrifft ein System zur Gewinnung von Wasser aus einem gasförmigen mit Wasser und/oder Wasserdampf beladenen Fluid, insbesondere einem Abgas einer Verbrennungskraftmaschine.

Die Druckschrift DE 10 2013 212 596 A1 beschreibt eine Vorrichtung zur Reduzierung der Schadstoffemissionen und/oder des Kraftstoffverbrauchs einer Brennkraftmaschine eines Kraftfahrzeugs, umfassend eine Einrichtung zur Abgasrückführung, über welche Abgas aus einem Abgastrakt einem Ansaugtrakt der Brennkraftmaschine zuführbar ist. Erfindungsgemäß umfasst die Vorrichtung einen Kondensatabscheider zur Wassergewinnung, der mit der Einrichtung zur Abgasrückführung verbunden ist, einen Speicherbehälter zur Bevorratung des gewonnenen Wassers, der an den Kondensatabscheider angeschlossen ist und eine Einrichtung zur Wasser- oder Emulsionseinspritzung, die über den Speicherbehälter mit Wasser versorgbar ist. Ferner betrifft die Erfindung ein Verfahren zur Reduzierung der Schadstoffemissionen und/oder des Kraftstoffverbrauchs einer Brennkraftmaschine.

Die Druckschrift DE 10 2016 205 525 A1 beschreibt eine Vorrichtung und ein Verfahren zur Gewinnung von Wasser aus Abgas, bei denen keine direkte Kondensation von Wasserdampf aus dem Abgas erfolgt, sondern ein zweistufiges Verfahren, wobei Wasserdampf aus dem Abgas zuerst in einem Absorptionselement absorbiert wird, dann mittels Wärme aus dem Absorptionselement entfernt wird und anschließend in einem Kondensator kondensiert wird.

Die Druckschrift DE 10 2016 206 043 offenbart eine Vorrichtung zur Gewinnung von Wasser, umfassend einen mit der Umgebung verbundenen Luftkanal, in welchen Umgebungsluft einströmbar ist, ein Absorptionselement, welches im Luftkanal angeordnet ist und Wasser und/oder Wasserdampf aus der zugeführten Umgebungsluft absorbieren kann, ein erstes Absperrelement, welches im Luftkanal in Strömungsrichtung durch den Luftkanal vor dem Absorptionselement angeordnet und eingerichtet ist, den Luftkanal freizugeben und zu verschließen, einen Wärmeübertrager, welcher eingerichtet ist, Wärme ein Abgases einer Brennkraftmaschine auf das Absorptionselement zu übertragen, ohne dass das Abgas in direktem Kontakt mit dem Absorptionselement kommt und einen Kondensator, welcher im Luftkanal in Strömungsrichtung durch den Luftkanal nach dem Absorptionselement angeordnet ist, um Wasser aus dem Luftstrom des Luftkanals zu kondensieren.

Die Druckschrift DE 100 26 695 C1 erläutert ein Verfahren und eine Vorrichtung zur Erzeugung von einer erforderlichen Menge Wasser durch Kondensation von im Abgas einer Verbrennungskraftmaschine enthaltenen Wasserdampfes, insbesondere für eine Wassereinspritzanlage der Verbrennungskraftmaschine eines Kraftfahrzeuges, wobei das kondensierte Wasser mit einer Leitungsanordnung geführt und in einem Behälter gespeichert wird, wobei die erforderliche Menge Wasser mittels einer Kondensationsvorrichtung aus dem Abgas kondensiert wird, die über den gesamten Betriebsbereich der Verbrennungskraftmaschine einen mittleren Kondensationswirkungsgrad von mindestens 25%, bevorzugt mindestens 50%, aufweist. Auf diese Weise wird eine Bereitstellung von zusätzlichem Wasser in einem separaten und nachfüllbaren Tank vermieden und trotzdem dauerhafte Wassergewinnung aus dem Abgas ermöglicht.

Die WO 02/059043 A2 beschreibt eine Vorrichtung und ein Verfahren zur Verwendung mit Verbrennungsmotoren, wie sie für Landfahrzeuge verwendet werden, zur On-Board-Rückgewinnung und Reinigung von Wasser. Die Wasserquelle stammt aus dem Abgas des Fahrzeugs, wo es durch Kondensation gesammelt wird. Das Wasserrückgewinnungssystem besteht aus einer Vorrichtung zum Kühlen des Abgases, um das Wasser auskondensieren zu können, beispielsweise einem Gegenstromwärmetauscher in Kombination mit einem Kühler (einem kältemittelgekühlten Wärmetauscher), der den Abgasstrom unter seinen Taupunkt kühlt. Abgaskondensat wird am Auslass des Kühlers gesammelt. Diese Kühlvorrichtungen können mit der Fahrzeugklimaanlage gekoppelt sein. Das kondensierte Wasser fließt dann durch den Wasserreinigungsabschnitt der vorliegenden Erfindung. Das Wasserreinigungssystem kann sich auf Feststofffiltration und verschiedene Formen von Aktivkohlen und Aktivkohlefaserverbundwerkstoffen stützen, die in Kombination mit lonenaustauschharzen verwendet werden können, um einen Wasserreinigungszug bereitzustellen, der in die Wasserrückgewinnungseinheit an Bord des Fahrzeugs integriert ist.

Die Druckschrift DE 10 2011 018 382 A1 beschreibt die Regeneration eines thermochemischen Sorptionsspeichers durch Zufuhr von Abwärme von Komponenten eines Fahrzeuges.

Allgemein bekannt sind thermochemische Wärmespeicher mit Granulat aus Silicagel oder Zeolith, die hygroskopisch und stark porös sind und deshalb eine große innere Oberfläche haben. Insbesondere Silikagele haben die Eigenschaft, Wasserdampf anzuziehen und an ihrer Oberfläche anzulagern (Adsorption), wobei Wärme frei wird. Umgekehrt muss zum Trocknen von Silikagelen (Desorption) Wärmeenergie aufgewendet werden, vergleiche insbesondere [https://de.wikipedia.org/wiki/Thermochemischer_W%C3%A4rmespeicher].

Ergänzend werden die Druckschriften US 2004/107832 A1, US 2007/095209 A1 und DE 10 2016 205 525 A1 genannt, die gattungsgemäße Systeme zur Wassergewinnung aus einem Abgas einer Verbrennungskraftmaschine beschreiben.

Der Erfindung liegt die Aufgabe zugrunde, ein verbessertes System zur Wassergewinnung aus einem Abgas einer Verbrennungskraftmaschine zu schaffen.

Ausgangspunkt der Erfindung ist eine Verbrennungskraftmaschine, die ein System zur Gewinnung von Wasser aus einem mit Wasser und/oder Wasserdampf beladenen Abgas der Verbrennungskraftmaschine aufweist.

### Das System umfasst:

Zwei Leitungsstränge mit mindestens einem zugeordneten Zufuhrstrang, dem die Verbrennungskraftmaschine vorgeschaltet ist, und mindestens einem den zwei Leitungssträngen zugeordneten Abfuhrstrang.

Zwei mit einem Adsorptionsmittel gefüllte Sorptionsbehälter.

Die zwei Leitungsstränge, die von dem mindestens einen Zufuhrstrang ausgehend, jeweils zu beiden Sorptionsbehältern geführt sind, wobei jeder Leitungsstrang mit den Sorptionsbehältern verbunden ist.

### Erfindungsgemäß umfasst das System weiter:

Zwei den Sorptionsbehältern zugeordnete Kondensationskammern und zwei den Kondensationskammern zugeordnete Kühlvorrichtungen.

Mindestens ein schaltbarer, den zwei Leitungssträngen zugeordneter Umschaltmechanismus, der das Abgas, gleichzeitig oder wechselseitig in den ersten Leitungsstrang und/oder den zweiten Leitungsstrang führt, wobei sich an die zwei Endladeleitungsbereiche des ersten Leitungsstranges und des zweiten Leitungsstranges zwei Beladeleitungsbereiche anschließen, wobei je ein Beladeleitungsbereich einem der Sorptionsbehälter zugordnet ist, wobei das gasförmige Fluid das Adsorptionsmittel der Sorptionsbehälter in den Beladeleitungsbereichen direkt zwischen dem gasförmigen Medium und dem Adsorptionsmittel in stofflichem Kontakt durchströmt, wonach das gasförmige Fluid über den mindestens einen den Leitungssträngen zugeordneten Abfuhrstrang aus dem System ausströmt.

Das System zeichnet sich dadurch aus, dass das Abgas das Adsorptionsmittel eines der Sorptionsbehälter indirekt ohne stofflichen Kontakt zwischen dem gasförmigen Medium und dem Adsorptionsmittel durchströmt, und das Adsorptionsmittel des anderen Sorptionsbehälters direkt mit stofflichen Kontakt zwischen dem Abgas und dem Adsorptionsmittel durchströmt.

In bevorzugter Ausgestaltung der Erfindung ist vorgesehen, dass den zwei Leitungssträngen ein gemeinsamer Zufuhrstrang und ein gemeinsamer Abfuhrstrang zugeordnet sind, wodurch das System besonders kompakt ausgebildet ist.

Es ist vorgesehen, die Kondensationskammern von den Sorptionsbehältern thermisch zu entkoppeln, um in vorteilhafter Weise einen unerwünschten Wärmeübergang zwischen den genannten Komponenten zu vermeiden.

Bevorzugt ist als Adsorptionsmittel Zeolith oder Silicagel vorgesehen. Die Adsorptionsmittel eignen sich besonders gut zur Ein- und Ablagerung von Wasser und/oder Wasserdampf.

Das System ist in einer erweiterten Ausführungsvariante bevorzugt derart ausgebildet, dass mindestens einem der Leitungsstränge zusätzlich ein öffenbares Absperrorgan zugeordnet ist, über welches mindestens einem der Leitungsstränge außerhalb des Betriebes der Verbrennungskraftmaschine ein anderes gasförmiges Fluid als sogenannte Fremdluft zuführbar ist, welches mit Wasser und/oder Wasserdampf beladen ist.

Als Fremdluft wird insbesondere Außenluft/Umgebungsluft des Kraftfahrzeuges und/oder Innenraumluft/Innenraumabluft des Kraftfahrzeuges angesehen.

Das System ist derart ausgebildet, dass bei einer nicht in Betrieb befindlichen Verbrennungskraftmaschine innerhalb der Verbrennungskraftmaschine VKM keine Ventilüberschneidung vorliegt, so dass das System zuführstrangseitig abgedichtet ist.

In einer Basis-Ausführungsvariante kann ein Verfahren zur Gewinnung von Wasser aus einem gasförmigen mit Wasser und/oder Wasserdampf beladenen Fluid mit dem erfindungsgemäßen System wie folgt ausgeführt werden:
In einer ersten Betriebsart wird in der Verbrennungskraftmaschine das gasförmige Fluid, insbesondere das Abgas erzeugt, das in einem ersten Schaltzustand der ersten Betriebsart durch den Entladeleitungsbereich des ersten Leitungsstrangs strömt, sodass Wärme aus dem gasförmigen Fluid in den ersten Sorptionsbehälter übertragen wird, wobei das gasförmige Fluid keinen Kontakt zu dem Adsorptionsmittel in dem ersten Sorptionsbehälter aufweist, wobei die auf das Adsorptionsmittel übertragene Wärme zum Ausheizen, mithin der thermischen Desorption des Wassers und/oder Wasserdampfes aus dem Adsorptionsmittel führt, wonach das gasförmige Fluid den Beladeleitungsbereich des ersten Leitungsstranges, der sich an den Entladeleitungsbereich des ersten Leitungsstranges anschließt, das Adsorptionsmittel im Beladeleitungsbereich des ersten Leitungsstranges im zweiten Sorptionsbehälter direkt durchströmt, sodass Wasser und/oder Wasserdampf an das Adsorptionsmittel abgegeben wird.

Vorgesehen ist ferner, dass in einer ersten Betriebsart, bei der die Verbrennungskraftmaschine das gasförmige Fluid, insbesondere das Abgas erzeugt, ein zweiter Schaltzustand eingestellt werden kann, bei dem das gasförmige Fluid durch den Entladeleitungsbereich des zweiten Leitungsstrangs strömt, sodass Wärme aus dem gasförmigen Fluid in den zweiten Sorptionsbehälter übertragen wird, wobei das gasförmige Fluid keinen Kontakt zu dem Adsorptionsmittel in dem zweiten Sorptionsbehälter aufweist, wobei die auf das Adsorptionsmittel übertragene Wärme zum Ausheizen, mithin der thermischen Desorption des Wassers und/oder Wasserdampfes aus dem Adsorptionsmittel führt, wonach das gasförmige Fluid den Beladeleitungsbereich des zweiten Leitungsstranges, der sich an den Entladeleitungsbereich des zweiten Leitungsstranges anschließt, das Adsorptionsmittel im Beladeleitungsbereich des zweiten Leitungsstranges im ersten Sorptionsbehälter direkt durchströmt, sodass Wasser und/oder Wasserdampf an das Adsorptionsmittel abgegeben wird.

Mittels des mindestens einen Umschaltmechanismus wird zwischen dem ersten Schaltzustand der ersten Betriebsart und dem zweiten Schaltzustand der ersten Betriebsart hin- und her geschaltet "getoggelt", wodurch in vorteilhafter Weise ein wechselseitiges Beladen mit Wasser und/oder Wasserdampf und ein Entladen von Wasserdampf aus dem jeweiligen Adsorptionsmittel jedes der beiden Sorptionsbehälter möglich ist.

In einer erweiterten Ausführungsvariante der Basis-Ausführungsvariante (gemäß der ersten Betriebsart) wird das Verfahren zur Gewinnung von Wasser aus einem gasförmigen mit Wasser und/oder Wasserdampf beladenen Fluid um eine zweite Betriebsart erweitert, bei der die Verbrennungskraftmaschine kein gasförmiges Fluid, insbesondere kein Abgas erzeugt.

Es ist vorgesehen, dass über mindestens ein öffenbares Absperrorgan mindestens einem der Beladeleitungsbereiche der Leitungsstränge direkt Fremdluft zugeführt wird, welches das Adsorptionsmittel in mindestens einem der Beladeleitungsbereiche des ersten Leitungsstranges im zweiten Sorptionsbehälter und/oder im Beladeleitungsbereich des zweiten Leitungsstranges im ersten Sorptionsbehälter direkt durchströmt, wodurch die Fremdluft mit dem Adsorptionsmittel in mindestens einem der Beladeleitungsbereiche in Kontakt kommt, sodass Wasser und/oder Wasserdampf an das Adsorptionsmittel abgegeben wird.

Dabei ist erfindungsgemäß bevorzugt vorgesehen, dass mittels des mindestens einen Umschaltmechanismus zwischen dem Beladeleitungsbereich des ersten Leitungsstranges im zweiten Sorptionsbehälter und dem Beladeleitungsbereich des zweiten Leitungsstranges im ersten Sorptionsbehälter hin- und her geschaltet "getoggelt" wird, sodass in den Schaltzuständen der zweiten Betriebsart nur einer der Beladeleitungsbereiche des ersten Leitungsstranges und des zweiten Leitungsstranges direkt von Fremdluft durchströmt wird, die über das mindestens eine öffenbare Absperrorgan mindestens einem der Beladeleitungsbereiche der Leitungsstränge direkt zugeführt wird oder der mindestens eine Umschaltmechanismus in einer Neutralposition geschaltet ist, sodass einem Schaltzustand der zweiten Betriebsart beide Beladeleitungsbereiche des ersten Leitungsstranges im zweiten Sorptionsbehälter und des zweiten Leitungsstranges im ersten Sorptionsbehälter direkt von Fremdluft durchströmt werden, die über das mindestens eine öffenbare Absperrorgan mindestens einem der Beladeleitungsbereiche der Leitungsstränge zugeführt wird.

Bevorzugt ist vorgesehen, dass zwischen den beiden Betriebsarten hin- und her geschaltet "getoggelt" wird, wobei die zweite Betriebsart in bevorzugter Ausgestaltung der Erfindung in Abhängigkeit des Überschreitens eines vorgebaren Grenzwertes der Feuchte, insbesondere der relativen Feuchte als Startbedingung für das hin- und herschalten, aktiv geschaltet wird.

Die Erfindung wird nachfolgend anhand der zugehörigen Zeichnungen erläutert. Es zeigen:
- Figur 1: den Aufbau des erfindungsgemäßen Systems zur Wassergewinnung;
- Figur 2A: das System gemäß Figur 1 mit funktioneller Darstellung einer ersten Betriebsart in der in einem ersten Schaltzustand Wasser/Wasserdampf aus einem ersten Sorptionsbehälter entladen und ein zweiter Sorptionsbehälter mit Wasser/Wasserdampf aus einem Abgas beladen wird;
- Figur 2B: das System gemäß Figur 1 mit funktioneller Darstellung der ersten Betriebsart in der in einem zweiten Schaltzustand Wasser/Wasserdampf aus dem zweiten Sorptionsbehälter entladen und der erste Sorptionsbehälter mit Wasser/Wasserdampf aus einem Abgas beladen wird;
- Figur 3: das System gemäß Figur 1 mit funktioneller Darstellung in einer zweiten Betriebsart in einem Schaltzustand einer möglichen Ausführungsvariante von mehreren möglichen Ausführungsvarianten, bei der zwei Sorptionsbehälter gleichzeitig mit Wasser/Wasserdampf, das/der in einer dem System zugeführten Fremdluft enthalten ist, beladen wird.

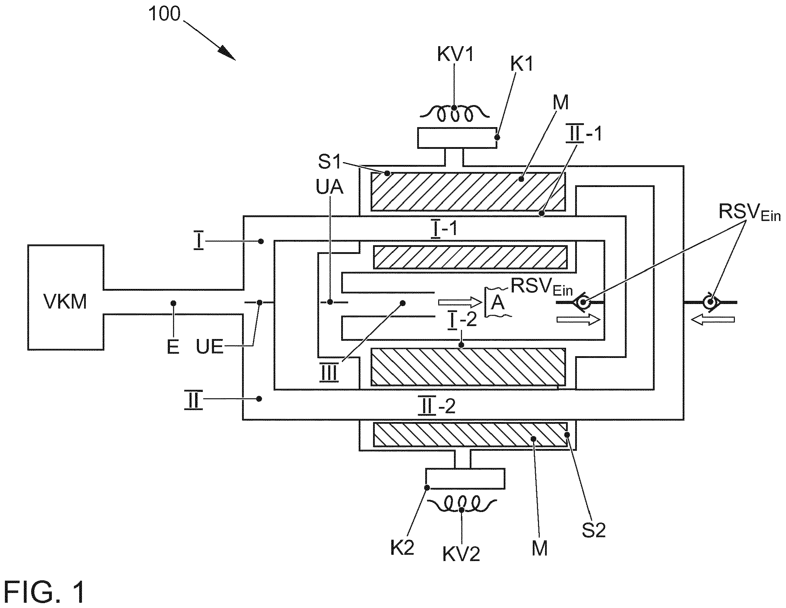

Die Figur 1 zeigt den Aufbau eines Systems 100 zur Wassergewinnung aus einem dem System 100 zugeführten Abgas einer Verbrennungskraftmaschine VKM, insbesondere eines Kraftfahrzeuges in einer ersten Betriebsart B1, wobei das System 100 ebenfalls in einer zweiten Betriebsart B2 dazu eingerichtet ist, Wasser durch dem System 100 zugeführte Fremdluft zu gewinnen.

Das System 100 kann in mehreren Gehäusen oder in einem einzigen Gehäuse integriert angeordnet sein. Das oder die Gehäuse in der die nachfolgend beschriebenen Komponenten angeordnet sind, sind in den Figuren nicht näher dargestellt.

Das System 100 weist eine Zufuhröffnung zu einem Zuführstrang E auf, wobei über die Zuführöffnung des Zuführstranges E in der ersten Betriebsart B1 Abgas zugeführt wird.

An den Zuführstrang E schließen sich zwei Endladeleitungsbereiche I-1 und II-2 eines ersten Leitungsstranges I und eines zweiten Leitungsstranges II an.

Das Abgas kann mittels eines Umstellmechanismus UE dem ersten oder zweiten Endladeleitungsbereich I-1 und II-2 zugeführt werden, sobald der Umstellmechanismus UE in einer der beiden möglichen Endpositionen angeordnet ist, wobei der Umstellmechanismus UE in Figur 1 zunächst in einer Neutralposition zwischen den Leitungssträngen I, II dargestellt ist, bei der beide Leitungsstränge I, II von Zuführstrang E in Strömungsrichtung gesehen offen geschaltet sind.

An den ersten Entladeleitungsbereich I-1 des ersten Leitungsstranges I schließt sich ein zweiter Beladeleitungsbereich I-2 des ersten Leitungsstranges I an.

An den zweiten Entladeleitungsbereich II-2 des zweiten Leitungsstranges II schließt sich ein erster Beladeleitungsbereich II-1 des zweiten Leitungsstranges II an.

Die beiden Beladeleitungsbereiche I-2 und II-1 werden in einem Abfuhrstrang A eines Abfuhrstranges III zusammengeführt, mit anderen Worten der erste Leitungsstrang I und der zweite Leitungsstrang II werden zu einem Abfuhrstrang III zusammengeführt, der beispielsweise ein Endrohr einer Abgasanlage (Abgasendrohr) oder dergleichen ist.

Das System 100 umfasst zudem einen ersten Sorptionsbehälter S1 und einen zweiten Sorptionsbehälter S2.

Der erste Sorptionsbehälter S1 weist in den Figuren eine Rechtsschraffur und der zweite Sorptionsbehälter S2 weist in den Figuren eine Linksschraffur auf.

Der erste Sorptionsbehälter S1 ist im Endladeleitungsbereich I-1 des ersten Leitungsstranges I und in Beladeleitungsbereich II-1 des zweiten Leitungsstranges II angeordnet.

Der zweite Sorptionsbehälter S2 ist im Endladeleitungsbereich II-2 des zweiten Leitungsstranges I und im Beladeleitungsbereich I-2 des ersten Leitungsstranges II angeordnet.

Die funktionelle Bedeutung dieser Zuordnung wird nachfolgend noch detailliert erläutert.

Dem ersten Sorptionsbehälter S1 ist eine erste Kondensationskammer K1 zugeordnet.

Dem zweiten Sorptionsbehälter S2 ist eine zweite Kondensationskammer K2 zugeordnet.

Die Kondensationskammern K1, K2 sind von Sorptionsbehältern S1 idealerweise thermisch entkoppelt.

Jeder Kondensationskammer K1, K2 ist eine Kühlvorrichtung KV1, KV2 zugeordnet.

Vor dem Abfuhrstrang III, in der Position in der die Beladeleitungsbereiche I-2 und II-1 des ersten Leitungsstranges I und des zweiten Leitungsstrang II zusammenkommen, ist ein weiterer Umstellmechanismus UA angeordnet, der jeweils einen der Beladeleitungsbereiche I-2 und II-1 gegenüber dem anderen Beladeleitungsbereich II-1, I-2 absperrt, wie noch erläutert wird. In Figur 1 ist der Umstellmechanismus UA in einer Neutralposition zwischen den Leitungssträngen I, II dargestellt, bei der die Beladeleitungsbereiche II-1, I-2 der Leitungsstränge I, II in Strömungsrichtung in Richtung Abfuhrstrang III offen geschaltet sind.

In jedem Fall, wird stets nur über einen der Leitungsstränge I, II Abgas in den Abfuhrstrang III geleitet, wobei der Umstellmechanismus UA, außerhalb der in Figur 1 dargestellten Neutralposition in einer der beiden Endpositionen dafür sorgt, dass kein Abgas rückwärts in die anderen Leitungsstränge I, II strömen kann, wie noch erläutert wird.

Die zuvor vorgestellten Komponenten werden zur Durchführung der ersten Betriebsart B1 benötigt, die nachfolgend noch detailliert erläutert wird.

Für die zweite Betriebsart B2 wird zusätzlich mindestens ein öffenbares Absperrorgan, insbesondere ein Rückschlagventil RSV_{Ein} angeordnet, dessen/deren Anordnung und Funktion noch erläutert wird. Für die erste Betriebsart wird/werden diese/s öffenbar Absperrorgan/e, insbesondere das/die Rückschlagventil/e RSV_{Ein} nicht benötigt.

In der zweiten Betriebsart B2 wird dem System 100 Fremdluft (kein Abgas) zugeführt, diese zweite Betriebsart wird ebenfalls noch detailliert erläutert.

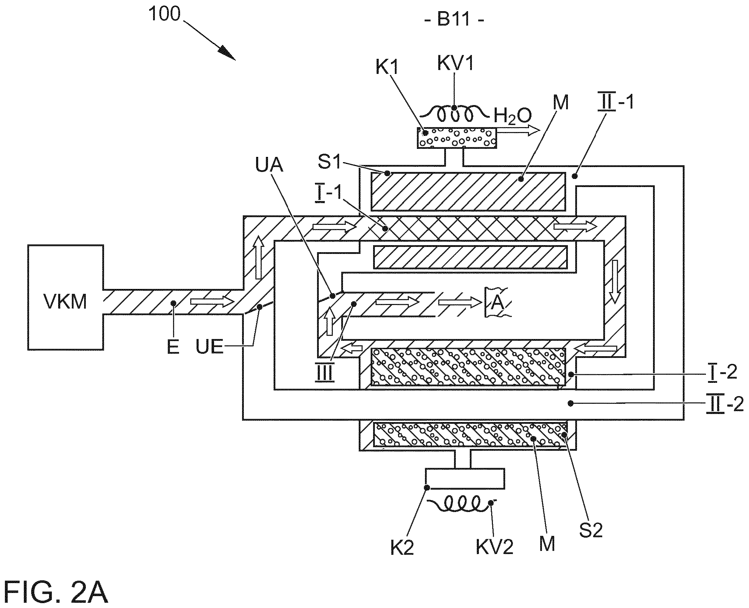

Das System 100 ist dazu eingerichtet, dass das Verfahren zur Wassergewinnung in der ersten Betriebsart B1 durchgeführt werden kann, wobei Figur 2A einen ersten Schaltzustand B11 verdeutlicht, in dem Wasser/Wasserdampf aus dem ersten Sorptionsbehälter S1 entladen und der zweite Sorptionsbehälter S2 mit Wasser/Wasserdampf aus dem Abgas beladen wird.

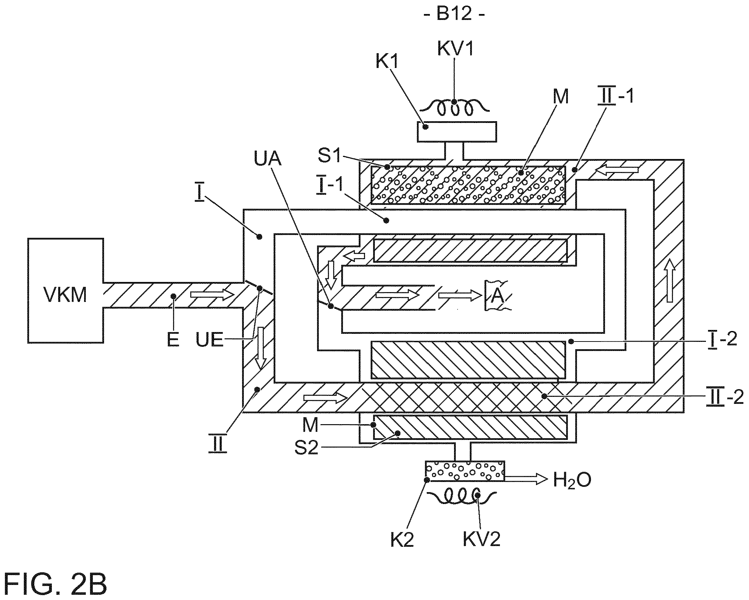

Das System 100 ist dazu eingerichtet, dass das Verfahren zur Wassergewinnung in der ersten Betriebsart B1 durchgeführt werden kann, wobei Figur 2B einen zweiten Schaltzustand B12 verdeutlicht, in dem Wasser/Wasserdampf aus dem zweiten Sorptionsbehälter S2 entladen und der erste Sorptionsbehälter S1 mit Wasser/Wasserdampf aus einem Abgas beladen wird.

Die erste Betriebsart B1 in dem ersten Schaltzustand B11 gemäß Figur 2A:
Die erste Betriebsart B1 kommt zum Einsatz, wenn die Verbrennungskraftmaschine VKM in Betrieb ist und Abgas erzeugt.

Über den Umstellmechanismus UE hinter dem Zuführstrang E wird der erste Leitungsstrang I aktiv geschaltet, das heißt der Umstellmechanismus UE verschließt den zweiten Leitungsstrang II.

Das warme Abgas, welches mit Wasser in flüssiger und/oder gasförmiger Phase beladen ist, strömt durch den ersten Entladeleitungsbereich I-1 (als Kreuzschraffur verdeutlicht) des ersten Leitungsstrangs I.

Der Entladeleitungsbereich I-1 des ersten Leitungsstrangs I ist derart mit dem ersten Sorptionsbehälter S1 verbunden, dass Wärme aus dem Abgas in den ersten Sorptionsbehälter S1 übertragen wird, wobei das Abgas keinen Kontakt zu dem Adsorptionsmittel M in dem ersten Sorptionsbehälter S1 hat. Es wird davon ausgegangen, dass in dem Adsorptionsmittel M in dem ersten Sorptionsbehälter S1 bereits Wasser und/oder Wasserdampf gespeichert ist.

Beim Durchströmen des warmen Abgases durch den Entladeleitungsbereich I-1 des ersten Leitungsstrangs I führt die auf das Adsorptionsmittel M übertragene Wärme zum Ausheizen, mithin der thermischen Desorption des Wassers oder Wasserdampfes aus dem Adsorptionsmittel M, welches als gasförmige Phase in die erste Kondensatorkammer K1 strömt und dort durch die erste Kühlvorrichtung KV1 kondensiert wird, wie die in Figur 2A dargestellte Punktstruktur in der ersten Kondensatorkammer K1 verdeutlicht.

Das kondensierte Wasser steht zur weiteren Verwendung zur Verfügung. Mit anderen Worten, es wird Wasser in Form von Wasserdampf durch thermische Desorption aus dem Adsorptionsmittel M des ersten Sorptionsbehälters S1 freigesetzt, mithin wird der erste Sorptionsbehälter S1 "Entladen".

Das Abgas hat sich während des Durchströmens des Entladeleitungsbereiches I-1 des ersten Leitungsstrangs I abgekühlt, sodass in vorteilhafter Weise der Anteil von flüssiger Phase gegenüber der gasförmigen Phase zunimmt beziehungsweise die Gasphase bereits abgekühlt ist.

Das Abgas erreicht den Beladeleitungsbereich I-2 des ersten Leitungsstranges I, der sich an den Entladeleitungsbereich I-1 des ersten Leitungsstranges I anschließt.

Das Abgas durchströmt das Adsorptionsmittel M im Beladeleitungsbereich I-2 des ersten Leitungsstranges I im zweiten Sorptionsbehälter S2 direkt, das heißt es kommt mit dem Adsorptionsmittel M im Beladeleitungsbereich I-2 in direkten Kontakt (wie in Figur 2A anhand der Punktstruktur innerhalb des Sorptionsbehälters S2 verdeutlicht wird), sodass Wasser und/oder Wasserdampf an das Adsorptionsmittel M abgegeben wird. Mit anderen Worten, das Adsorptionsmittel M des zweiten Sorptionsbehälters S2 wird mit Wasser und/oder Wasserdampf angereichert, mithin "Beladen".

Das Abgas gelangt schließlich zu dem gemeinsamen Abfuhrstrang III, wobei der Umstellmechanismus UA derart geschaltet ist, dass das Abgas nicht zu dem ersten Sorptionsbehälter S1 strömen kann, sondern nur zu einer Abfuhröffnung des Abfuhrstranges A, insbesondere des Endrohrs gelangen kann, wobei das Abgas über die Abfuhröffnung (in Figur 2A angedeutet) in dem Abfuhrstrang A in die Umgebung gelangt.

Dadurch ist schließlich zusammengefasst, der erste Sorptionsbehälter S1 "entladen" und der zweite Sorptionsbehälter S2 "beladen".

Um jetzt Wasser aus dem zweiten beladenen Sorptionsbehälter S2 zu entladen, schlägt die Erfindung in der ersten Betriebsart B1 einen zweiten Schaltzustand B12 gemäß Figur 2B vor.

Die erste Betriebsart B1 in dem zweiten Schaltzustand B12 gemäß Figur 2B:
Während die Verbrennungskraftmaschine VKM weiter in Betrieb ist und Abgas erzeugt, erfolgt eine Umschaltung der Umstellmechanismen UE, UA wie folgt:
Über den Umstellmechanismus UE hinter dem Zuführstrang E wird der zweite Leitungsstrang II aktiv geschaltet, das heißt der Umstellmechanismus UE verschließt den ersten Leitungsstrang I.

Das warme Abgas, welches mit Wasser in flüssiger und/oder gasförmiger Phase beladen ist, strömt jetzt durch den Entladeleitungsbereich II-2 (als Kreuzschraffur verdeutlicht) des zweiten Leitungsstrangs II.

Der Entladeleitungsbereich II-2 des zweiten Leitungsstrangs II ist derart mit dem zweiten Sorptionsbehälter S2 verbunden, dass Wärme aus dem Abgas in den zweiten Sorptionsbehälter S2 übertragen wird, wobei das Abgas keinen Kontakt zu dem Adsorptionsmittel M in dem zweiten Sorptionsbehälter S2 hat.

In dem Adsorptionsmittel M ist bereits durch die Beladung des Adsorptionsmittels M während des ersten Schaltzustandes B11 in der ersten Betriebsart B1 in dem zweiten Sorptionsbehälter S2 Wasser und/oder Wasserdampf gespeichert.

Beim Durchströmen des warmen Abgases durch den Entladeleitungsbereich II-2 des zweiten Leitungsstrangs II führt die auf das Adsorptionsmittel M übertragene Wärme zum Ausheizen, mithin der thermischen Desorption des Wassers oder Wasserdampfes aus dem Adsorptionsmittel M, welches als gasförmige Phase in die zweite Kondensatorkammer K2 strömt und dort durch die zweite Kühlvorrichtung KV2 kondensiert wird, wie die in Figur 2B dargestellte Punktstruktur in der zweiten Kondensatorkammer K2 verdeutlicht.

Das kondensierte Wasser steht zur weiteren Verwendung zur Verfügung. Mit anderen Worten, es wird Wasser durch thermische Desorption aus dem Adsorptionsmittel M des zweiten Sorptionsbehälters S2 freigesetzt, mithin wird jetzt der zweite Sorptionsbehälter S2 "Entladen".

Das Abgas hat sich während des Durchströmens des Entladeleitungsbereiches II-2 des zweiten Leitungsstrangs II abgekühlt, sodass in vorteilhafter Weise der Anteil von flüssiger Phase gegenüber der gasförmigen Phase zunimmt beziehungsweise die Gasphase bereits abgekühlt ist.

Das Abgas erreicht den Beladeleitungsbereich II-1 des zweiten Leitungsstranges II, der sich an den Entladeleitungsbereich II-2 des zweiten Leitungsstranges II anschließt.

Das Abgas durchströmt jetzt das Adsorptionsmittel M im Beladeleitungsbereich II-1 im zweiten Sorptionsbehälter S2 direkt, das heißt, es kommt mit dem Adsorptionsmittel M im Beladeleitungsbereich II-1 in direkten Kontakt (wie in Figur2B anhand der Punktstruktur innerhalb des Sorptionsbehälters S2 verdeutlicht wird), sodass Wasser und/oder Wasserdampf an das Adsorptionsmittel M abgegeben wird. Mit anderen Worten, das Adsorptionsmittel M des ersten Sorptionsbehälters S1 wird mit Wasser und/oder Wasserdampf angereichert, mithin "Beladen".

Das Abgas gelangt schließlich zu dem gemeinsamen Abfuhrstrang III, wobei der Umstellmechanismus UA derart geschaltet ist, dass das Abgas nicht zu dem zweiten Sorptionsbehälter S2 strömen kann, sondern nur zu der Abfuhröffnung des Abfuhrstranges A, insbesondere des Endrohrs gelangen kann, wobei das Abgas über die Abfuhröffnung (in Figur 2B angedeutet) in dem Abfuhrstrang A in die Umgebung gelangt.

Dadurch ist schließlich zusammengefasst, der erste Sorptionsbehälter S1 entladen und der zweite Sorptionsbehälter S2 beladen. Um jetzt Wasser aus dem ersten beladenen Sorptionsbehälter S1 zu entladen, schlägt die Erfindung vor, in der ersten Betriebsart B1 wieder in den ersten Schaltzustand B11 gemäß Figur 2A (zurück) zu wechseln.

Der Fachmann spricht beim Umschalten von einem Schaltzustand B11 in einen anderen Schaltzustand B12 und zurück vom sogenannten "Toggeln". Im konkreten Fall wird unter Auswahl von zwei Durchströmungsrichtungen hinsichtlich der Sorptionsbehälter S1, S2 zwischen zwei Leitungssträngen I, II hin- und her geschaltet, sodass die Sorptionsbehälter S1 und S2 wechselseitig - wie zuvor erläutert befahren werden, wodurch erfindungsgemäß ein kontinuierliches Beladen und Entladen des Adsorptionsmittels M der Sorptionsbehälter S1, S2 gewährleistet wird.

Erfindungsgemäß, erfolgt die Steuerung durch die Umstellmechanismen UE, UA, die als Klappen oder dergleichen in dem Leitungsstrangsystem I, II, II angeordnet sind. Diese schaltungstechnische Zuordnung kann auch auf verschiedene andere Art und Weise realisiert und vom Fachmann im Rahmen seines Fachwissens entsprechend ausgewählt werden.

Bei der dargestellten kompakten erfindungsgemäßen Ausgestaltung bei der alle Komponenten in einem Gehäuse zusammengeschaltet und angeordnet sind, werden nur zwei Umstellmechanismen UE, UA benötigt. Es versteht sich, dass den Umstellmechanismen UE, UA Aktoren zugeordnet sind, die eine entsprechende (Fern-) Steuerung der Umstellmechanismen UE, UA innerhalb des Systems bewirken.

Die Kondensation des ausgeheizten aus dem Adsorptionsmittel M desorbierten Wasserdampfes in den beiden Kondensationskammern K1, K2, die thermisch von den Sorptionsbehältern S1, S2 getrennt angeordnet sind, wird in bevorzugter Ausgestaltung durch nicht näher dargestellten Aggregate (Lüfter oder dergleichen) mit einem Kühlmedium zwangsdurchströmt, wobei als Kühlmedium ein flüssiges oder gasförmiges Medium insbesondere Wasser oder Luft zum Einsatz kommt. Diese Aggregate werden vom Fachmann in die (Fern-) Steuerung des Systems einbezogen.

Die Erfindung schlägt eine Ausgestaltungsvariante vor, die es ermöglicht, die Sorptionsbehälter S1, S2 in einer zweiten Betriebsart mit Fremdluft zu "Beladen", wie nachfolgend erläutert wird.

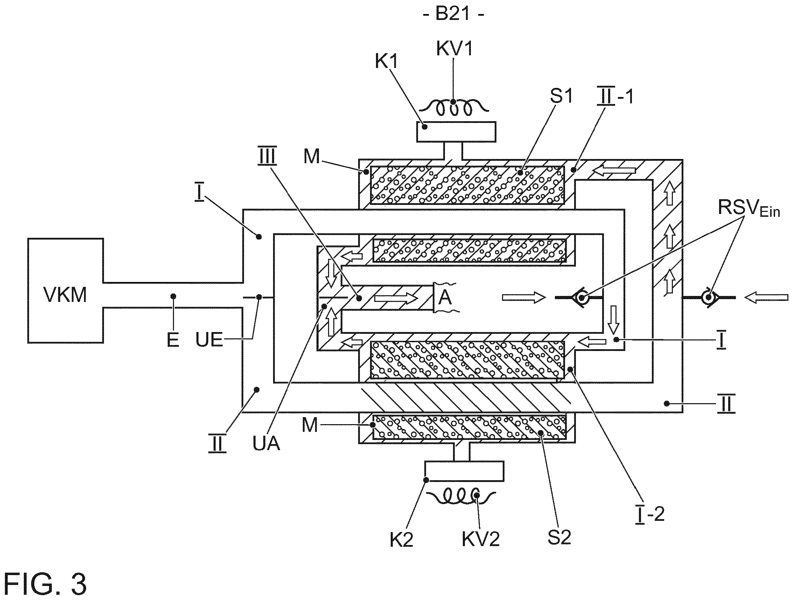

Die zweite Betriebsart B2 gemäß Figur 3:
In Figur 3 ist das System 100 in der zweiten Betriebsart B2 in einem Schaltzustand in einer möglichen Ausführungsvariante von mehreren Ausführungsvarianten, bei der zwei Sorptionbehälter S1, S2 gleichzeitig beladen werden, hinsichtlich des Aufbaus (analog zu Figur 1) und funktionell dargestellt.

Wie bereits in Zusammenhang mit Figur 1 zum Aufbau des Systems 100 erläutert, ist zur Durchführung der zweiten Betriebsart B2 mindestens ein Rückschlagventil RSV_{Ein} angeordnet, welches für die erste Betriebsart B1 nicht benötigt wird.

Gemäß Figur 3 sind zwei Rückschlagventile RSV_{Ein} angeordnet, die ein Einströmen von Fremdluft, insbesondere Außenluft/Umgebungsluft des Kraftfahrzeuges und/oder Innenraumluft/ Innenraumabluft des Kraftfahrzeuges in den ersten Leitungsstrang I oder in den zweiten Leitungsstrang II in Richtung der in Figur 3 dargestellten Pfeile ermöglichen.

Die zweite Betriebsart B2 wird eingesetzt, wenn die Verbrennungskraftmaschine VKM außer Betrieb ist. Nicht näher dargestellte Verdrängeraggregate drücken die Luft über die Rückschlagventile RSV_{Ein} in die Leitungsstränge I, II. Diese Aggregate werden vom Fachmann ebenfalls in die (Fern-) Steuerung des Systems einbezogen.

In der gewählten und dargestellten Ausführungsvariante befinden sich die Umstellmechanismen UE, UA in einer Neutralposition, so dass beide Leitungsstränge I, II zu dem Abfuhrstrang III hin offen sind, so dass die Luft wie bisher über die Abfuhröffnung (in Figur 3 angedeutet) in den Abfuhrstrang A in die Umgebung gelangt, nachdem die Fremdluft über beide Leitungsstränge I, II durch das jeweilige Adsorptionsmittel M der Sorptionsbehälter S1, S2 geströmt ist.

Dabei kann die Luft nicht über die Verbrennungskraftmaschine VKM in die Umgebung ausströmen, da dafür gesorgt wird, dass bei ausgeschalteter Verbrennungskraftmaschine VKM innerhalb der Verbrennungskraftmaschine VKM keine Ventilüberschneidung vorliegt, so dass das System 100 zuführstrangseitig (bei Bezugszeichen E) abgedichtet ist.

Bei der gewählten Ausführungsvariante eines Schaltzustandes B21 der zweiten Betriebsart B2 strömt mit Wasserdampf beladene Fremdluft über die Rückschlagventile RSV_{Ein} direkt in die Beladeleitungsbereiche I-2 und II-1 des ersten und zweiten Leitungsstrangs I, II und durchströmt das Adsorptionsmittel M im Beladeleitungsbereich I-2 des ersten Leitungsstranges I im zweiten Sorptionsbehälter S2 und im Beladeleitungsbereich II-2 des zweiten Leitungsstranges II im ersten Sorptionsbehälter S1 direkt, das heißt, die Luft kommt mit dem Adsorptionsmittel M in den Beladeleitungsbereichen I-2, II-1 in Kontakt (wie in Figur 3 anhand der Punktstrukturen innerhalb der Sorptionsbehälter S1, S2 verdeutlicht wird), sodass Wasser und/oder Wasserdampf an das jeweilige Adsorptionsmittel M abgegeben wird. Mit anderen Worten, das Adsorptionsmittel M beider Sorptionsbehälter S1 und S2 wird mit Wasser und/oder Wasserdampf angereichert, mithin "Beladen". Dabei verändert sich die Strömungsrichtung der Fremdluft gemäß Figur 3 gegenüber der Strömungsrichtung des Abgases im Vergleich zu den Figuren 2A und 2B beim "Beladen" beim Durchströmen des Adsorptionsmittels der Sorptionsbehälter S1, S2 nicht.

Es versteht sich, dass andere Ausführungsvarianten des Systems 100, bei dem zur Durchführung der zweiten Betriebsart nur ein Rückschlagventil RSV_{Ein} angeordnet ist, ausgebildet sein können. Das heißt, mindestens eines der beiden in Figur 3 dargestellten Rückschlagventile RSV_{Ein} muss angeordnet sein. Eine Beladung der Sorptionsbehälter S1 und S2 in den Beladeleitungsbereichen I-2 und II-1 erfolgt dann in Abhängigkeit der Stellung des Umstellmechanismus UE, der am Ende des ersten und zweiten Leitungsstranges I, II angeordnet ist, und die Leitungsstränge I, II in Richtung des Abfuhrstranges III nacheinander öffnet oder schließt.

Der Umstellmechanismus UE befindet sich dann nicht mehr in der in Figur 3 dargestellten Neutralposition, sondern wechselt zwischen seinen Endlagen und verschließt somit entweder den ersten Leitungsstrang I gegenüber dem Abfuhrstrang III oder den zweiten Leitungsstrang II gegenüber dem Abfuhrstrang III, so dass sich stets ein offener Pfad für die Belade-Fremdluft bildet, der über einen der Beladeleitungsbereiche I-2 und II-1 eines der Sorptionsbehälter S1, S2 führt, so dass stets eine Beladung des Adsorptionsmittels M mit Belade-Fremdluft in einem der Sorptionsbehälter S1, S2 gewährleistet ist.

Durch entsprechendes Umschalten, mithin dem erläuterten "Toggeln" wird für eine wechselseitige Durchströmung, insbesondere Beladung des Sorptionsbehälter S1, S2 innerhalb der zweiten Betriebsart B2 mit Belade-Fremdluft gesorgt.

Bei einigen möglichen Durchströmungsszenarien strömt die Beladeluft auch durch die in der ersten Betriebsart B1; B11, B12 vorgesehenen Entladeleitungsbereiche I-1, II-2 der Leitungsstränge I, II jedoch kommt es dabei in der zweiten Betriebsart B2 nicht zu einem Ausheizen des Wassers und/oder Wasserdampfes innerhalb des Adsorptionsmittels M der Sorptionsbehälter S1, S2, weil die in der Beladeluft vorhandene Wärmemenge nicht ausreicht, um Wasser oder Wasserdampf aus dem Adsorptionsmittel M der Sorptionsbehälter S1, S2 thermisch (ohne Stoffaustausch) zu desorbieren.

In einer bevorzugten Ausgestaltung der Erfindung wird die zweite Betriebsart B2 in Abhängigkeit der relativen Feuchte der Luft eingesetzt. Mit anderen Worten, das System 100 erfasst die relative Feuchte der Fremdluft, insbesondere der Außenluft/Umgebungsluft des Kraftfahrzeuges und/oder der Innenraumluft/ Innenraumabluft des Kraftfahrzeuges und die zweite Betriebsart B2 wird zugeschaltet, wenn die Verbrennungskraftmaschine VKM außer Betrieb ist und ein vorgebbare Grenzwert der relativen Luftfeuchte überschritten wird. Somit umfasst das System 100 mindestens einen nicht näher dargestellten Sensoren zur Feuchtemessung der Fremdluft. Diese Sensoren werden vom Fachmann ebenfalls in die (Fern-Sperre) Steuerung des Systems einbezogen.

Bevorzugt wird als Adsorptionsmittel M Zeolith oder Silicagel verwendet.

Der Vorteil des Systems 100 und des zugehörigen Verfahrens der Erfindung besteht darin, dass das derart gewonnene Wasser nach der Kondensatgewinnung gemäß der ersten Betriebsart auf direktem Weg für die Wassereinspritzung der Verbrennungskraftmaschine VKM eingesetzt werden kann. Mit anderen Worten, innerhalb des Fahrzeuges ist ein geschlossener Kreislauf realisierbar, wobei die Wassergewinnung an den Wasserbedarf angepasst werden kann, wobei die benötigte Wassermenge innerhalb der ersten Betriebsart B1 und der zweiten Betriebsart B2 "Beladen" und innerhalb ersten Betriebsart "Entladen" werden kann, wobei die "Beladung" und "Entladung" entsprechend an den Wasserbedarf der Wasserverbraucher des Fahrzeuges angepasst werden kann.

Hinzu kommt, dass sich in einem Kraftfahrzeug die benötigte Wassermenge über den Bedarf hinsichtlich der Wassereinspritzung der Verbrennungskraftmaschine VKM noch weiter erhöht, da beispielsweise Wasser für die Sensorreinigung und/oder die Scheibenreinigung des Kraftfahrzeuges benötigt wird. Dieser beispielhafte Bedarf oder weitere Bedarfe können bei der zuvor erläuterten Gewinnung der Wassermenge innerhalb der ersten Betriebsart B1 und der zweiten Betriebsart B2 zusätzlich berücksichtigt werden.

Im Ergebnis erhöht sich der Komfort für den Anwender dahin, dass er bei ausreichender Gewinnung von Wasser keinen separaten Tank mehr nachfüllen muss, da stets ausreichend Wasser aus dem System 100 zur Verfügung gestellt werden kann. Bisherige Lösungen bei denen beispielsweise Kondensat aus der Klimaanlage gewonnen wird, sind nicht in der Lage, ausreichende Wassermengen bereitzustellen. Es wird jedoch erfindungsgemäß zusätzlich vorgeschlagen, dass aus einer Klimaanlage gewonnen Wasser einem Bevorratungsbehälter(nicht dargestellt) des Systems100, dem das Wasser aus den Kondensationskammern K1, K2 zugeführt wird, zuzuführen, sodass das System 100 mit einem System 100 zur Wassergewinnung aus der Klimaanlage strukturell und verfahrensseitig gekoppelt ist.

### Bezugszeichenliste

- 100: System
- B1: erste Betriebsart
- B2: zweite Betriebsart
- E: Zuführleitung
- A: Abfuhrleitung, Endrohr
- I-1: Entladungsleitungsbereich
- II-2: Entladungsleitungsbereich
- I: erster Leitungsstrang
- II: zweiter Leitungsstrang
- UE: Umstellmechanismus
- UA: Umstellmechanismus
- I-2: Beladeleitungsbereich
- II-1: Beladeleitungsbereich
- III: Abfuhrstrang
- S1: erster Sorptionsbehälter
- S2: zweiter Sorptionsbehälter
- K1: erste Kondensationskammer
- K2: zweite Kondensationskammer
- KV1: erste Kühlvorrichtung
- KV2: zweite Kühlvorrichtung
- B11: erster Schaltzustand der ersten Betriebsart B1
- B12: zweiter Schaltzustand der zweiten Betriebsart B2
- B21: Ausführungsvariante eines Schaltzustandes in der zweiten Betriebsart
- RSV_{Ein}: Absperrorgane (Rückschlagventile)
- VKM: Verbrennungskraftmaschine
- M: Adsorptionsmittel

## Patentansprüche

1. Verbrennungskraftmaschine (VKM) umfassend ein System (100) zur Gewinnung von Wasser aus einem mit Wasser und/oder Wasserdampf beladenen Abgas der Verbrennungskraftmaschine (VKM), umfassend:
• zwei Leitungsstränge (I, II) mit mindestens einem zugeordneten Zufuhrstrang (E), dem die Verbrennungskraftmaschine (VKM) vorgeschaltet ist, und mindestens einem den zwei Leitungssträngen (I, II) zugeordneten Abfuhrstrang (III),
• zwei mit einem Adsorptionsmittel (M) gefüllte Sorptionsbehälter (S1, S2),
• die zwei Leitungsstränge (I, II), die von dem mindestens einem Zufuhrstrang (E) ausgehend, jeweils zu beiden Sorptionsbehältern (S1, S2) geführt sind, wobei jeder Leitungsstrang (I, II) mit den Sorptionsbehältern (S1, S2) verbunden ist, **dadurch gekennzeichnet, dass**
∘ das Abgas das Adsorptionsmittel (M) eines der Sorptionsbehälter (S1, S2) indirekt ohne stofflichen Kontakt zwischen dem Abgas und dem Adsorptionsmittel (M) durchströmt, und
∘ das Adsorptionsmittel (M) des anderen Sorptionsbehälters (S1, S2) direkt mit stofflichem Kontakt zwischen dem Abgas und dem Adsorptionsmittel (M) durchströmt,
• zwei den Sorptionsbehältern (S1, S2) zugeordnete Kondensationskammern (K1, K2) und zwei den Kondensationskammern (K1, K2) zugeordnete Kühlvorrichtungen (KV1, KV2),
• mindestens ein schaltbarer, den zwei Leitungssträngen (I, II) zugeordneter Umschaltmechanismus (UE), der das Abgas, gleichzeitig oder wechselseitig in den ersten Leitungsstrang (I) und/oder den zweiten Leitungsstrang (II) führt,
• wobei sich an zwei Entladeleitungsbereiche (I-1, II-2) des ersten Leitungsstranges (I) und des zweiten Leitungsstranges (II) zwei Beladeleitungsbereiche (I-2, II-1) anschließen, wobei je ein Beladeleitungsbereich (I-II-1) einem der Sorptionsbehälter (S1, S2) zugordnet ist, wobei das Abgas das Adsorptionsmittel (M) der Sorptionsbehälter (S1, S2) in den Beladeleitungsbereichen (I-2, II-1) direkt zwischen dem Abgas und dem Adsorptionsmittel (M) in stofflichem Kontakt durchströmt, wonach das Abgas über den mindestens einen den Leitungssträngen (I, II) zugeordneten Abfuhrstrang (III) aus dem System (100) ausströmt.

2. Verbrennungskraftmaschine (VKM) nach Anspruch 1, **dadurch gekennzeichnet, dass** den zwei Leitungssträngen (I, II) ein gemeinsamer Zufuhrstrang (E) und ein gemeinsamer Abfuhrstrang (III) zugeordnet ist.

3. Verbrennungskraftmaschine (VKM) nach Anspruch 1, **dadurch gekennzeichnet, dass** sich an den mindestens einen Zuführstrang (E) zwei Entladeleitungsbereiche (I-1, II-2) des ersten Leitungsstranges (I) und des zweiten Leitungsstranges (II) anschließen, wobei je ein Entladeleitungsbereich (I-1, II-2) einem der Sorptionsbehälter (S1, S2) zugordnet ist, wobei das Abgas das Adsorptionsmittel (M) der Sorptionsbehälter (S1, S2) in den Entladeleitungsbereichen (I-1, II-2) indirekt zwischen dem Abgas und dem Adsorptionsmittel (M) ohne stofflichen Kontakt durchströmt.

4. Verbrennungskraftmaschine (VKM) nach Anspruch 1, **dadurch gekennzeichnet, dass** die Kondensationskammern (K1, K2) von den Sorptionsbehältern (S1, S2) thermisch entkoppelt sind.

5. Verbrennungskraftmaschine (VKM) nach Anspruch 1, **dadurch gekennzeichnet, dass** das Adsorptionsmittel (M) Zeolith oder Silicagel ist.

6. Verbrennungskraftmaschine (VKM) nach Anspruch 1, **dadurch gekennzeichnet, dass** mindestens einem der Leitungsstränge (I, II) zusätzlich ein öffenbares Absperrorgan (RSV_{Ein}) zugeordnet ist, über welches mindestens einem der Leitungsstränge (I, II) außerhalb des Betriebes der Verbrennungskraftmaschine (VKM) ein anderes gasförmiges Fluid als Fremdluft zuführbar ist, welches mit Wasser und/oder Wasserdampf beladen ist.

7. Verbrennungskraftmaschine (VKM) nach Anspruch 1, **dadurch gekennzeichnet, dass** bei einer nicht in Betrieb befindlichen Verbrennungskraftmaschine (VKM) innerhalb der Verbrennungskraftmaschine (VKM) keine Ventilüberschneidung vorliegt, so dass das System (100) zuführstrangseitig abgedichtet ist.

8. Verfahren zur Gewinnung von Wasser aus einem mit Wasser und/oder Wasserdampf beladenen Abgas einer Verbrennungskraftmaschine (VKM) mit einem System (100) nach mindestens einem der Ansprüche 1 bis 7, **dadurch gekennzeichnet, dass**
• in einer ersten Betriebsart (B1) die Verbrennungskraftmaschine (VKM) das Abgas in einem ersten Schaltzustand (B11)
• durch den Entladeleitungsbereich (I-1) des ersten Leitungsstrangs (I) strömt, sodass Wärme aus dem Abgas auf den ersten Sorptionsbehälter (S1) übertragen wird, wobei das Abgas keinen Kontakt zu dem Adsorptionsmittel (M) in dem ersten Sorptionsbehälter (S1) aufweist, wobei die auf das Adsorptionsmittel (M) übertragene Wärme zum Ausheizen, mithin der thermischen Desorption des Wassers und/oder Wasserdampfes aus dem Adsorptionsmittel (M) führt,
• wonach das Abgas den Beladeleitungsbereich (I-2) des ersten Leitungsstranges (I), der sich an den Entladeleitungsbereich (I-1) des ersten Leitungsstranges (I) anschließt, das Adsorptionsmittel (M) im Beladeleitungsbereich (I-2) des ersten Leitungsstranges (I) im zweiten Sorptionsbehälter (S2) direkt durchströmt, sodass Wasser und/oder Wasserdampf an das Adsorptionsmittel (M) abgegeben wird.

9. Verfahren zur Gewinnung von Wasser aus einem mit Wasser und/oder Wasserdampf beladenen Abgas einer Verbrennungskraftmaschine (VKM) mit einem System (100) nach mindestens einem der Ansprüche 1 bis 7, **dadurch gekennzeichnet, dass**
• in einer ersten Betriebsart (B1) die Verbrennungskraftmaschine (VKM) das Abgas in einem zweiten Schaltzustand (B12)
• durch den Entladeleitungsbereich (II-2) des zweiten Leitungsstrangs (II) strömt, sodass Wärme aus dem Abgas in den zweiten Sorptionsbehälter (S2) übertragen wird, wobei das Abgas keinen Kontakt zu dem Adsorptionsmittel (M) in dem zweiten Sorptionsbehälter (S2) aufweist, wobei die auf das Adsorptionsmittel (M) übertragene Wärme zum Ausheizen, mithin der thermischen Desorption des Wassers und/oder Wasserdampfes aus dem Adsorptionsmittel (M) führt,
• wonach das Abgas den Beladeleitungsbereich (II-1) des zweiten Leitungsstranges (II), der sich an den Entladeleitungsbereich (II-2) des zweiten Leitungsstranges (II) anschließt, das Adsorptionsmittel (M) im Beladeleitungsbereich (II-1) des zweiten Leitungsstranges (II) im ersten Sorptionsbehälter (S1) direkt durchströmt, sodass Wasser und/oder Wasserdampf an das Adsorptionsmittel (M) abgegeben wird.

10. Verfahren nach Anspruch 8 und 9, **dadurch gekennzeichnet, dass** mittels eines Umschaltmechanismus (UE) zwischen dem ersten Schaltzustand (B11) der ersten Betriebsart (B1) und dem zweiten Schaltzustand (B12) der ersten Betriebsart (B1) hin- und her geschaltet "getoggelt" wird.

11. Verfahren zur Gewinnung von Wasser aus einem mit Wasser und/oder Wasserdampf Abgas einer Verbrennungskraftmaschine (VKM) mit einem System (100) nach mindestens einem der Ansprüche 1 bis 7, **dadurch gekennzeichnet, dass**
• in einer zweiten Betriebsart (B2), bei der die Verbrennungskraftmaschine (VKM) kein Abgas erzeugt,
• über mindestens ein öffenbares Absperrorgan (RSV_{Ein}) mindestens einem der Beladeleitungsbereiche (I-2 und II-1) der Leitungsstränge (I, II) direkt Fremdluft zugeführt wird,
• welches das Adsorptionsmittel (M) in mindestens einem der Beladeleitungsbereiche (I-2) des ersten Leitungsstranges (I) im zweiten Sorptionsbehälter (S2) und/oder im Beladeleitungsbereich (II-2) des zweiten Leitungsstranges (II) im ersten Sorptionsbehälter (S1) direkt durchströmt, wodurch die Fremdluft mit dem Adsorptionsmittel (M) in mindestens einem der Beladeleitungsbereiche (I-2, II-1) in Kontakt kommt, sodass Wasser und/oder Wasserdampf an das Adsorptionsmittel (M) abgegeben wird.

12. Verfahren nach Anspruch 11, **dadurch gekennzeichnet, dass**
• mittels des mindestens einen Umschaltmechanismus (UE) zwischen dem Beladeleitungsbereich (I-2) des ersten Leitungsstranges (I) im zweiten Sorptionsbehälter (S2) und dem Beladeleitungsbereich (II-2) des zweiten Leitungsstranges (II) im ersten Sorptionsbehälter (S1) hin- und her geschaltet "getoggelt" wird, sodass in Schaltzuständen der zweiten Betriebsart (B2) nur einer der Beladeleitungsbereiche (I-2, II-2) des ersten Leitungsstranges (I) und des zweiten Leitungsstranges (II) direkt von Fremdluft durchströmt wird, die über das mindestens eine öffenbare Absperrorgan (RSV_{Ein}) mindestens einem der Beladeleitungsbereiche (I-2 und II-1) der Leitungsstränge (I, II) direkt zugeführt wird oder
• der mindestens eine Umschaltmechanismus (UE) in einer Neutralposition geschaltet ist, sodass einem Schaltzustand (B21) der zweiten Betriebsart (B2) beide Beladeleitungsbereiche (I-2, II-2) des ersten Leitungsstranges (I) im zweiten Sorptionsbehälter (S2) und des zweiten Leitungsstranges (II) im ersten Sorptionsbehälter (S1) direkt von Fremdluft durchströmt werden, die über das mindestens eine öffenbare Absperrorgan (RSV_{Ein}) mindestens einem der Beladeleitungsbereiche (I-2 und II-1) der Leitungsstränge (I, II) zugeführt wird.

13. Verfahren nach den Ansprüchen 8 oder 9 und 11, **dadurch gekennzeichnet, dass** zwischen den beiden Betriebsarten (B1, B2) hin- und her geschaltet "getoggelt" wird, wobei die zweite Betriebsart (B2) in Abhängigkeit des Überschreitens eines vorgebaren Grenzwertes der Feuchte, insbesondere der relativen Feuchte als Startbedingung für das Hin- und Herschalten, aktiv geschaltet wird.

## Claims

1. Internal combustion engine (VKM) comprising a system (100) for recovering water from water-laden and/or water-vapour-laden exhaust gas of the internal combustion engine (VKM), comprising:
• two line sections (I, II) with at least one associated supply section (E), which is connected upstream of the internal combustion engine (VKM), and at least one expulsion section (III) which is assigned to the two line sections (I, II),
• two sorption vessels (S1, S2) which are filled with an adsorption agent (M),
• the two line sections (I, II) that proceed from the at least one feed section (E) are led in each case to the two sorption vessels (S1, S2), wherein each line section (I, II) is connected to the sorption vessels (S1, S2), **characterized in that**
o the exhaust gas flows through the adsorption agent (M) of one of the sorption vessels (S1, S2) without material contact between the exhaust gas and the adsorption agent (M), and
o the adsorption agent (M) of the other sorption vessel (S1, S2) flows through directly with material contact between the exhaust gas and the adsorption agent (M),
• two condensation chambers (K1, K2) which are assigned to the sorption vessels (S1, S2) and two cooling devices (KV1, KV2) which are assigned to the condensation chambers (K1, K2),
• at least one switchable switching mechanism (UE) which is assigned to the two line sections (I, II) and which conducts the exhaust gas simultaneously or alternately into the first line section (I) and/or the second line section (II),
• wherein two discharging line regions (I-1, II-2) of the first line section (I) and of the second line section (II) are joined by two charging line regions (I-2, II-1), wherein in each case one charging line region (1-2, II-1) is assigned to one of the sorption vessels (S1, S2), wherein the exhaust gas flows through the adsorption agent (M) of the sorption vessels (S1, S2) in the charging line regions (1-2, II-1) directly with material contact between the exhaust gas and the adsorption agent (M), following which the exhaust gas flows out of the system (100) via the at least one expulsion section (III) assigned to the line sections (I, II).

2. Internal combustion engine (VKM) according to Claim 1, **characterized in that** the two line sections (I, II) are assigned a common supply section (E) and a common expulsion section (III).

3. Internal combustion engine (VKM) according to Claim 1, **characterized in that** the at least one supply section (E) is adjoined by two discharging line regions (1-1, II-2) of the first line section (I) and of the second line section (II), wherein in each case one discharging line region (1-1, II-2) is assigned to one of the sorption vessels (S1, S2), wherein the exhaust gas flows through the adsorption agent (M) of the sorption vessels (S1, S2) in the discharging line regions (1-1, II-2) indirectly without material contact between the exhaust gas and the adsorption agent (M).

4. Internal combustion engine (VKM) according to Claim 1, **characterized in that** the condensation chambers (K1, K2) are thermally decoupled from the sorption vessels (S1, S2).

5. Internal combustion engine (VKM) according to Claim 1, **characterized in that** the adsorption agent (M) is zeolite or silica gel.

6. Internal combustion engine (VKM) according to Claim 1, **characterized in that** at least one of the line sections (I, II) is additionally assigned an openable shut-off element (RSV_{Ein}) via which, outside the operation of the internal combustion engine (VKM), a water-laden and/or water-vapour-laden gaseous fluid other than external air can be supplied to at least one of the line sections (I, II) .

7. Internal combustion engine (VKM) according to Claim 1, **characterized in that**, in the case of an internal combustion engine (VKM) which is not in operation, no valve overlap is present within the internal combustion engine (VKM), such that the system (100) is sealed off at the supply section side.

8. Method for recovering water from a water-laden and/or water-vapour-laden exhaust gas of an internal combustion engine (VKM) with a system (100) according to at least one of Claims 1 to 7, **characterized in that**
• in a first operating mode (B1), the internal combustion engine (VKM) the exhaust gas in a first switching state (B11)
• flows through the discharging line region (I-1) of the first line section (I) such that heat is transferred from the exhaust gas to the first sorption vessel (S1), wherein the exhaust gas has no contact with the adsorption agent (M) in the first sorption vessel (S1), wherein the heat transferred to the adsorption agent (M) leads to the water and/or water vapour being baked out of, that is to say thermally desorbed from, the adsorption agent (M),
• following which the exhaust gas flows through the charging line region (1-2) of the first line section (I), which adjoins the discharging line region (I-1) of the first line section (I) and the adsorption agent (M) in the charging line region (1-2) of the first line section (I) in the second sorption vessel (S2), such that water and/or water vapour is released to the adsorption agent (M) .

9. Method for recovering water from a water-laden and/or water-vapour-laden exhaust gas of an internal combustion engine (VKM) with a system (100) according to at least one of Claims 1 to 7, **characterized in that**
• in a first operating mode (B1), the internal combustion engine (VKM) the exhaust gas in a second switching state (B12)
• flows through the discharging line region (II-2) of the second line section (II) such that heat is transferred from the exhaust gas into the second sorption vessel (S2), wherein the exhaust gas has no contact with the adsorption agent (M) in the second sorption vessel (S2), wherein the heat transferred to the adsorption agent (M) leads to the water and/or water vapour being baked out of, that is to say thermally desorbed from, the adsorption agent (M),
• following which the exhaust gas flows through the charging line region (II-1) of the second line section (II), which adjoins the discharging line region (II-2) of the second line section (II) and the adsorption agent (M) in the charging line region (II-1) of the second line section (II) in the first sorption vessel (S1), such that water and/or water vapour is released to the adsorption agent (M).

10. Method according to Claim 8 and 9, **characterized in that**, by means of a switching mechanism (UE), "toggling" switching is performed back and forth between the first switching state (B11) of the first operating mode (B1) and the second switching state (B12) of the first operating mode (B1).

11. Method for recovering water from a water-laden and/or water-vapour-laden exhaust gas of an internal combustion engine (VKM) with a system (100) according to at least one of Claims 1 to 7, **characterized in that**
• in a second operating mode (B2), in which the internal combustion engine (VKM) generates no exhaust gas,
• external air is supplied by means of at least one openable shut-off element (RSV_{Ein}) directly to at least one of the charging line regions (1-2 and II-1) of the line sections (I, II),
• which external air flows directly through the adsorption agent (M) in at least one of the charging line regions (1-2) of the first line section (I) in the second sorption vessel (S2) and/or in the charging line region (II-2) of the second line section (II) in the first sorption vessel (S1), whereby the external air comes into contact with the adsorption agent (M) in at least one of the charging line regions (1-2, II-1) such that water and/or water vapour is released to the adsorption agent (M) .

12. Method according to Claim 11, **characterized in that**
• by means of the at least one switching mechanism (UE), "toggling" switching is performed back and forth between the charging line region (1-2) of the first line section (I) in the second sorption vessel (S2) and the charging line region (II-2) of the second line section (II) in the first sorption vessel (S1), such that, in switching states of the second operating mode (B2), only one of the charging line regions (1-2, II-2) of the first line section (I) and of the second line section (II) is directly flowed through by external air, which is supplied by means of the at least one openable shut-off element (RSV_{Ein}) directly to at least one of the charging line regions (1-2 and II-1) of the line sections (I, II), or
• the at least one switching mechanism (UE) is switched in a neutral position such that, a switching state (B21) of the second operating mode (B2), both charging line regions (1-2, II-2) of the first line section (I) in the second sorption vessel (S2) and of the second line section (II) in the first sorption vessel (S1) are directly flowed through by external air which is supplied by means of the at least one openable shut-off element (RSV_{Ein}) to at least one of the charging line regions (1-2 and II-1) of the line sections (I, II).

13. Method according to any of Claims 8 or 9 and 11, **characterized in that** "toggling" switching is performed back and forth between the two operating modes (B1, B2), wherein the second operating mode (B2) is actively switched in a manner dependent on the overshooting of a specifiable threshold value of the humidity, in particular of the relative humidity, as a starting condition for the switching back and forth.

## Revendications

1. Moteur à combustion interne (VKM), comprenant un système (100) permettant de récupérer de l'eau à partir d'un gaz d'échappement, chargé en eau et/ou en vapeur d'eau, du moteur à combustion interne (VKM), comprenant :
• deux branches de conduite (I, II) comprenant au moins une branche d'alimentation associée (E) par rapport à laquelle le moteur à combustion interne (VKM) est placé en amont, et au moins une branche d'évacuation (III) associée aux deux branches de conduite (I, II),
• deux récipients de sorption (S1, S2) remplis d'un adsorbant (M),
• les deux branches de conduite (I, II) qui, en partant de ladite au moins une branche d'alimentation (E), mènent respectivement aux deux récipients de sorption (S1, S2), chaque branche de conduite (I, II) étant reliée aux récipients de sorption (S1, S2), **caractérisé en ce que**
o le gaz d'échappement passe indirectement par l'adsorbant (M) d'un des récipients de sorption (S1, S2) sans contact physique entre le gaz d'échappement et l'adsorbant (M), et
o l'adsorbant (M) de l'autre récipient de sorption (S1, S2) passe directement avec un contact physique entre le gaz d'échappement et l'adsorbant (M),
• deux chambres de condensation (K1, K2) associées aux récipients de sorption (S1, S2) et deux dispositifs de refroidissement (KV1, KV2) associés aux chambres de condensation (K1, K2),
• au moins un mécanisme de commutation (UE) commutable, associé aux deux branches de conduite (I, II), qui conduit le gaz d'échappement simultanément ou en alternance dans la première branche de conduite (I) et/ou la deuxième branche de conduite (II),
• dans lequel deux zone de conduite de chargement (I-2, II-1) sont adjacentes à deux zones de conduite de déchargement (I-1, II-2) de la première branche de conduite (I) et de la deuxième branche de conduite (II), respectivement une zone de conduite de chargement (I-2, II-1) étant associée à l'un des récipients de sorption (S1, S2), le gaz d'échappement passant par l'adsorbant (M) des récipients de sorption (S1, S2) dans les zones de conduite de chargement (I-2, II-1) directement entre le gaz d'échappement et l'adsorbant (M) en contact physique, après quoi le gaz d'échappement s'échappe du système (100) par ladite au moins branche d'évacuation (III) associée aux branches de conduite (I, II).

2. Moteur à combustion interne (VKM) selon la revendication 1, **caractérisé en ce qu'**une branche d'alimentation (E) commune et une branche d'évacuation (III) commune sont associées aux deux branches de conduite (I, II).

3. Moteur à combustion interne (VKM) selon la revendication 1, **caractérisé en ce que** ladite au moins une branche d'alimentation (E) est suivie de deux zones de conduite de déchargement (I-1, II-2) de la première branche de conduite (I) et de la deuxième branche de conduite (II), respectivement une zone de conduite de déchargement (I-1, II-2) étant associée à l'un des récipients de sorption (S1, S2), le gaz d'échappement passant indirectement par l'adsorbant (M) des récipients de sorption (S1, S2) dans les zones de conduite de déchargement (I-1, II-2) entre le gaz d'échappement et l'adsorbant (M) sans contact physique.

4. Moteur à combustion interne (VKM) selon la revendication 1, **caractérisé en ce que** les chambres de condensation (K1, K2) sont découplées thermiquement des récipients de sorption (S1, S2).

5. Moteur à combustion interne (VKM) selon la revendication 1, **caractérisé en ce que** l'adsorbant (M) est de la zéolithe ou du gel de silice.

6. Moteur à combustion interne (VKM) selon la revendication 1, **caractérisé en ce qu'**au moins l'une des branches de conduite (I, II) est en outre associée à un organe de verrouillage (RSV_{Ein}) pouvant être ouvert et qui, en dehors du fonctionnement du moteur à combustion interne (VKM), permet d'amener à au moins l'une des branches de conduite (I, II) un autre fluide gazeux chargé d'eau et/ou de vapeur d'eau sous forme d'air extérieur.

7. Moteur à combustion interne (VKM) selon la revendication 1, **caractérisé en ce que** pour un moteur à combustion interne (VKM) qui n'est pas en fonctionnement, il n'y a aucun chevauchement des soupapes à l'intérieur du moteur à combustion interne (VKM) de sorte que le système (100) est rendu étanche côté branche d'alimentation.

8. Procédé permettant de récupérer de l'eau à partir d'un gaz d'échappement chargé en eau et/ou en vapeur d'eau d'un moteur à combustion interne (VKM) comprenant un système (100) selon au moins l'une des revendications 1 à 7, **caractérisé en ce que**
• dans un premier mode de fonctionnement (B1), le moteur à combustion interne (VKM) le gaz d'échappement dans un premier état de commutation (B11)
• passe par la zone de conduite de déchargement (I-1) de la première branche de conduite (I) de sorte que la chaleur provenant du gaz d'échappement est transférée au premier récipient de sorption (S1), le gaz d'échappement n'ayant aucun contact avec l'adsorbant (M) dans le premier récipient de sorption (S1), la chaleur transférée à l'adsorbant (M) aboutissant au chauffage, et donc à la désorption thermique, de l'eau et/ou de la vapeur d'eau de l'adsorbant (M),
• après quoi le gaz d'échappement passe directement par la zone de conduite de chargement (I-2) de la première branche de conduite (I) qui est adjacente à la zone de conduite de déchargement (I-1) de la première branche de conduite (I) et l'adsorbant (M) dans la zone de conduite de chargement (I-2) de la première branche de conduite (I) dans le deuxième récipient de sorption (S2) de sorte que de l'eau et/ou de la vapeur d'eau est/sont dégagée(s) vers l'adsorbant (M).

9. Procédé permettant de récupérer de l'eau à partir d'un gaz d'échappement chargé en eau et/ou en vapeur d'eau d'un moteur à combustion interne (VKM) comprenant un système (100) selon au moins l'une des revendications 1 à 7, **caractérisé en ce que**
• dans un premier mode de fonctionnement (B1), le moteur à combustion interne (VKM) le gaz d'échappement dans un deuxième état de commutation (B12)
• passe par la zone de conduite de déchargement (II-2) de la deuxième branche de conduite (II) de sorte que la chaleur provenant du gaz d'échappement est transférée au deuxième récipient de sorption (S2), le gaz d'échappement n'ayant aucun contact avec l'adsorbant (M) dans le deuxième récipient de sorption (S2), la chaleur transférée à l'adsorbant (M) aboutissant au chauffage, et donc à la désorption thermique, de l'eau et/ou de la vapeur d'eau de l'adsorbant (M),
• après quoi le gaz d'échappement passe directement par la zone de conduite de chargement (II-1) de la deuxième branche de conduite (II) qui est adjacente à la zone de conduite de déchargement (II-2) de la deuxième branche de conduite (II) et l'adsorbant (M) dans la zone de conduite de chargement (II-1) de la deuxième branche de conduite (II) dans le premier récipient de sorption (S1) de sorte que de l'eau et/ou de la vapeur d'eau est/sont dégagée(s) vers l'adsorbant (M) .

10. Procédé selon la revendication 8 et 9, **caractérisé en ce qu'**un mécanisme de commutation (UE) permet de commuter ou « basculer » entre le premier état de commutation (B11) du premier mode de fonctionnement (B1) et le deuxième état de commutation (B12) du premier mode de fonctionnement (B1).

11. Procédé permettant de récupérer de l'eau à partir d'un gaz d'échappement chargé en eau et/ou en vapeur d'eau d'un moteur à combustion interne (VKM) comprenant un système (100) selon au moins l'une des revendications 1 à 7, **caractérisé en ce que**
• dans un deuxième mode de fonctionnement (B2) dans lequel le moteur à combustion interne (VKM) ne produit aucun gaz d'échappement,
• de l'air extérieur est amené directement à au moins à l'une des zones de conduite de chargement (I-2 et II-1) des branches de conduite (I, II) par au moins un organe de verrouillage (RSV_{Ein}) pouvant être ouvert,
• ledit air passant directement par l'adsorbant (M) dans au moins l'une des zones de conduite de chargement (I-2) de la première branche de conduite (I) dans le deuxième récipient de sorption (S2) et/ou dans la zone de conduite de chargement (II-2) de la deuxième branche de conduite (II) dans le premier récipient de sorption (S1), de sorte que l'air extérieur entre en contact avec l'adsorbant (M) dans au moins l'une des zones de conduite de chargement (I-2, II-1) de sorte que de l'eau et/ou de la vapeur d'eau est/sont dégagée(s) vers l'adsorbant (M).

12. Procédé selon la revendication 11, **caractérisé en ce que**
• ledit au moins un mécanisme de commutation (UE) permet de commuter ou « basculer » entre la zone de conduite de chargement (I-2) de la première branche de conduite (I) dans le deuxième récipient de sorption (S2) et la zone de conduite de chargement (II-2) de la deuxième branche de conduite (II) dans le premier récipient de sorption (S1), de sorte que dans des états de commutation du deuxième mode de fonctionnement (B2), seule l'une des zones de conduite de chargement (I-2, II-2) de la première branche de conduite (I) et de la deuxième branche de conduite (II) est traversée directement par l'air extérieur qui est amené directement par ledit au moins un organe de verrouillage (RSV_{Ein}) pouvant être ouvert à au moins l'une des zones de conduite de chargement (I-2 et II-1) des branches de conduite (I, II), ou
• ledit au moins un mécanisme de commutation (UE) est commuté sur une position neutre de sorte que un état de commutation (B21) du deuxième mode de fonctionnement (B2), les deux zones de conduite de chargement (I-2, II-2) de la première branche de conduite (I) dans le deuxième récipient de sorption (S2) et de la deuxième branche de conduite (II) dans le premier récipient de sorption (S1) sont traversées directement par l'air extérieur qui est amené par ledit au moins un organe de verrouillage (RSV_{Ein}) pouvant être ouvert à au moins l'une des zones de conduite de chargement (I-2 et II-1) des branches de conduite (I, II) .

13. Procédé selon l'une quelconque des revendications 8 ou 9 et 11, **caractérisé par** une commutation ou un « basculement » entre les deux modes de fonctionnement (B1, B2), le deuxième mode de fonctionnement (B2) étant activé en fonction du dépassement d'une valeur limite prédéfinissable de l'humidité, en particulier de l'humidité relative, comme une condition de départ de la commutation.
